(19) Europäisches Patentamt
European Patent Office
Office européen des brevets

(11) **EP 4 769 918 A1**

(12) **EUROPEAN PATENT APPLICATION**
published in accordance with Art. 153(4) EPC

(43) Date of publication:
01.07.2026 Bulletin 2026/27

(51) International Patent Classification (IPC):
H02M 1/00 (2006.01)     H02M 1/36 (2007.01)
H02J 7/00 (2026.01)

(21) Application number: 24878588.3

(22) Date of filing: 19.07.2024

(86) International application number:
PCT/CN2024/106461

(87) International publication number:
WO 2025/081936 (24.04.2025 Gazette 2025/17)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 18.10.2023 CN 202311353812

(71) Applicant: Huawei Digital Power Technologies
Co., Ltd.
Shenzhen, Guangdong 518043 (CN)

(72) Inventors:
• WU, Yihong
  Shenzhen, Guangdong 518043 (CN)
• GUO, Haibin
  Shenzhen, Guangdong 518043 (CN)
• MENG, Yuandong
  Shenzhen, Guangdong 518043 (CN)
• ZHANG, Yifei
  Shenzhen, Guangdong 518043 (CN)

(74) Representative: Maiwald GmbH
Engineering
Elisenhof
Elisenstrasse 3
80335 München (DE)

(54) **POWER CONVERTER AND CONTROL METHOD THEREFOR, AND ENERGY STORAGE SYSTEM**

(57) This application provides a power converter and a control method thereof, and an energy storage system. The power converter includes a plurality of power conversion circuits connected in parallel, and in response to a decrease in total output power of output ends of the plurality of power conversion circuits, at least one of the plurality of power conversion circuits may be switched from an operating state to a stopped state, so that conversion efficiency of each power conversion circuit in the operating state is improved, to improve operating efficiency of the power converter, especially efficiency of the power converter under light load.

FIG. 3

EP 4 769 918 A1

**Description**

CROSS-REFERENCE TO RELATED APPLICATIONS

This application claims priority to Chinese Patent Application No. 202311353812.X, filed with the China National Intellectual Property Administration on October 18, 2023 and entitled "POWER CONVERTER AND CONTROL METHOD THEREOF, AND ENERGY STORAGE SYSTEM", which is incorporated herein by reference in its entirety.

TECHNICAL FIELD

This application relates to the field of energy technologies, and in particular, to a power converter and a control method thereof, and an energy storage system.

BACKGROUND

In an energy storage system, to pursue maximum charge and discharge and improve system round-trip efficiency, a plurality of dimensions such as power conversion efficiency, battery state of charge (state of charge, SOC) estimation precision, and energy consumption management are usually comprehensively considered. As power of a power conversion device increases, based on requirements such as device power, costs, and output ripples, the power conversion device in the energy storage system usually uses a topology structure in which a plurality of power conversion circuits are connected in parallel. Actual conversion efficiency of the power conversion circuit cannot reach 100% because of a conduction loss, a switching loss, a gate drive loss, and the like in a conversion process. There is a parabola-like relationship between a total loss and a switching frequency of the power conversion circuit. Currently, factors such as the output ripple, the switching loss, a temperature rise, a minimum duty cycle limit, and electromagnetic compatibility (electromagnetic compatibility, EMC) are usually comprehensively considered, to control the power conversion circuit to operate at an optimal switching frequency point as much as possible, so as to improve the conversion efficiency of the power conversion circuit. In the power conversion device including the plurality of power conversion circuits connected in parallel, when load remains unchanged, the conversion efficiency of the power conversion device can indeed be improved by optimally controlling the switching frequency in the power conversion circuit to reduce a conversion loss. However, when the load falls within a light load range, the conversion efficiency of the power conversion circuit is significantly reduced, especially in a topology structure in which a plurality of power converters are connected in parallel and each power converter operates in a low-efficiency state. This is not conducive to improving the round-trip efficiency of the energy storage system.

SUMMARY

This application provides a power converter and a control method thereof, and an energy storage system, to improve operating efficiency of the power converter, especially system efficiency under light load.

According to a first aspect, embodiments of this application provide a power converter. The power converter includes a plurality of power conversion circuits connected in parallel. An input end of each power conversion circuit is connected to an output end of an energy storage apparatus, an output end of each power conversion circuit is configured to connect to a direct current bus or an alternating current bus, to connect to a load device or a power grid, and the power conversion circuit is configured to output a bus voltage or an alternating current after power conversion is performed on a battery voltage provided by the energy storage apparatus. The power converter may further include a controller. Each power conversion circuit includes a plurality of switching transistors. The controller is configured to control an on/off state of the switching transistor in each power conversion circuit, to control an output voltage and an output current of the power conversion circuit, and further control output efficiency and conversion efficiency of the power conversion circuit.

In this application, when total output power of the power converter decreases because a load of the power converter changes, at least one of the plurality of power conversion circuits may be controlled to be switched from an operating state to a stopped state, so that after the total output power of the power converter decreases to a specified value, each power conversion circuit in the operating state has first conversion efficiency. After the at least one power conversion circuit is switched from the operating state to the stopped state, each power conversion circuit in the operating state has second conversion efficiency. The second conversion efficiency is greater than the first conversion efficiency. This improves conversion efficiency of the power conversion circuit in the operating state, and further improves operating efficiency of the power converter. The conversion efficiency can be obtained through calculation based on input power and output power.

In some embodiments of this application, when the total output power of the power converter increases because the load of the power converter changes, the at least one of the plurality of power conversion circuits may be controlled to be switched from the stopped state to the operating state, so that after the total output power of the power converter increases to a specified value, each power conversion circuit in the operating state has third conversion efficiency. After the at least one power conversion circuit is switched from the stopped state to the operating state, each power conversion circuit in the operating state has fourth conversion efficiency. The fourth conversion efficiency is greater than the third conversion efficiency. This improves the conversion efficiency of the power conversion circuit in the operating state, and further improves the operating efficiency of the power converter.

In some embodiments of this application, the controller may obtain a current output voltage and a current output current of the output end of the power converter in real time, calculate current total output power of the power converter in real time, determine an optimal operating quantity of the plurality of power conversion circuits based on total rated power of the power converter and a preset load rate of the power converter, and control a quantity of power conversion circuits in the operating state in the plurality of power conversion circuits to be switched to the optimal operating quantity, so that operating efficiency of each power converter is optimal. The preset load rate is determined based on a relationship between conversion efficiency and a load rate of the plurality of power conversion circuits and preset conversion efficiency of the plurality of power conversion circuits.

In some embodiments of this application, the controller may first determine a current total load rate of the plurality of power conversion circuits based on the current total output power of the plurality of power conversion circuits and the total rated power of the plurality of power conversion circuits. The total load rate may be specifically equal to a ratio of the total output power to the total rated power. Then, the controller determines the optimal operating quantity of the plurality of power conversion circuits based on the total load rate and the known preset load rate. Finally, the controller controls the quantity of operating power conversion circuits in the plurality of power conversion circuits to be switched to the optimal operating quantity. In this way, conversion power borne by the power conversion circuit in the operating state is increased to a high conversion efficiency range, to complete conversion efficiency optimization control. The known preset load rate may be learned of based on a known efficiency curve of a single power conversion circuit.

In this application, the optimal operating quantity is determined, so that the power conversion circuit can be controlled to operate in the high conversion efficiency range at the current load rate, to prevent all power conversion circuits from operating at a light-load and low-efficiency point, reduce a total loss of the power converter, and significantly improve system operating efficiency.

In some embodiments of this application, when determining that the total load rate of the plurality of power conversion circuits meets the preset load rate of the plurality of power conversion circuits, the controller may specifically determine that the total load rate of the plurality of power conversion circuits is at a specified efficiency stage in the efficiency curve, that is, determine that a quantity of power conversion circuits currently in the operating state is the optimal operating quantity, and maintain the quantity of currently operating power conversion circuits. When determining that the total load rate of the plurality of power conversion circuits does not meet the preset load rate of the plurality of power conversion circuits, the controller may further determine that the total load rate of the plurality of power conversion circuits is not at the specified efficiency stage in the efficiency curve, and determine the optimal operating quantity of the plurality of power conversion circuits based on the preset load rate corresponding to the specified efficiency stage, rated power of a single power conversion circuit, and the current total output power of the plurality of power conversion circuits.

In some embodiments of this application, when determining that there are a plurality of optimal operating quantities of the plurality of power conversion circuits, the controller may determine, from the plurality of optimal operating quantities as a final optimal operating quantity, an operating quantity of power conversion circuits with highest conversion efficiency and in the operating state in the plurality of power conversion circuits. Specifically, when it is determined that the optimal operating quantity is not a unique value, load rates corresponding to the plurality of optimal operating quantities may be separately determined. Then, an optimal efficiency point in the load rates corresponding to the plurality of optimal operating quantities is determined based on the efficiency curve of the single power conversion circuit, and the final optimal operating quantity is determined based on the optimal efficiency point, to ensure that all power conversion circuits in the operating state have highest conversion efficiency after the optimal operating quantity is switched to.

In some other embodiments of this application, when determining that there are a plurality of optimal operating quantities of the plurality of power conversion circuits, the controller may determine, from the plurality of optimal operating quantities as a final optimal operating quantity, an operating quantity closest to a current operating quantity of the plurality of power conversion circuits. Specifically, when it is determined that the optimal operating quantity is not a unique value, the quantity of operating power conversion circuits in the plurality of power conversion circuits may also be controlled to be switched to the optimal operating quantity closest to the quantity of currently operating power conversion circuits, so that a quantity of actions of the power conversion circuit can be reduced, and stable operation of the system is facilitated.

The power converter provided in this embodiment of this application may be widely used in an energy storage system like an industrial and commercial energy storage system, a power station energy storage system, or a charging station.

According to a second aspect, this application provides an energy storage system. The energy storage system may include the power converter and the energy storage apparatus according to any possible design in the first aspect.

Input ends of a plurality of power conversion circuits in the power converter are connected to an output end of the energy storage apparatus, output ends of the plurality of power conversion circuits are connected to a load device or a power grid, and the power converter is configured to output, after power conversion, electric energy provided by the energy storage apparatus. Based on total output power of the plurality of power conversion circuits, different power conversion circuits in the plurality of power conversion circuits may be controlled to enter or exit operation, to change a quantity of operating power conversion circuits in the plurality of power conversion circuits, so that output efficiency of each power conversion circuit in an operating state is improved, to improve operating efficiency of the power converter, especially system efficiency under light load.

According to a third aspect, this application provides a control method for a power converter. The power converter includes a plurality of power conversion circuits connected in parallel, and the control method includes: When total output power of the power converter decreases because a load of the power converter changes, at least one of the plurality of power conversion circuits may be controlled to be switched from an operating state to a stopped state, so that after the total output power of the power converter decreases to a specified value, each power conversion circuit in the operating state has first conversion efficiency. After the at least one power conversion circuit is switched from the operating state to the stopped state, each power conversion circuit in the operating state has second conversion efficiency. The second conversion efficiency is greater than the first conversion efficiency. This improves conversion efficiency of the power conversion circuit in the operating state, and further improves operating efficiency of the power converter. The conversion efficiency can be obtained through calculation based on input power and output power.

In some embodiments of this application, when the total output power of the power converter increases because the load of the power converter changes, the at least one of the plurality of power conversion circuits may be controlled to be switched from the stopped state to the operating state, so that after the total output power of the power converter increases to a specified value, each power conversion circuit in the operating state has third conversion efficiency. After the at least one power conversion circuit is switched from the stopped state to the operating state, each power conversion circuit in the operating state has fourth conversion efficiency. The fourth conversion efficiency is greater than the third conversion efficiency. This improves the conversion efficiency of the power conversion circuit in the operating state, and further improves the operating efficiency of the power converter.

In some embodiments of this application, a current output voltage and a current output current of the output end of the power converter may be obtained in real time, current total output power of the power converter is calculated in real time, an optimal operating quantity of the plurality of power conversion circuits is determined based on total rated power of the power converter and a preset load rate of the power converter, and a quantity of power conversion circuits in the operating state in the plurality of power conversion circuits is controlled to be switched to the optimal operating quantity, so that operating efficiency of each power converter is optimal. The preset load rate is determined based on a relationship between conversion efficiency and a load rate of the plurality of power conversion circuits and preset conversion efficiency of the plurality of power conversion circuits.

In some embodiments of this application, a current total load rate of the plurality of power conversion circuits may be first determined based on the current total output power of the plurality of power conversion circuits and the total rated power of the plurality of power conversion circuits. The total load rate may be specifically equal to a ratio of the total output power to the total rated power. Then, a controller determines the optimal operating quantity of the plurality of power conversion circuits based on the total load rate and the known preset load rate. Finally, the controller controls the quantity of operating power conversion circuits in the plurality of power conversion circuits to be switched to the optimal operating quantity. In this way, conversion power borne by the power conversion circuit in the operating state is increased to a high conversion efficiency range, to complete conversion efficiency optimization control. The known preset load rate may be learned of based on a known efficiency curve of a single power conversion circuit.

In some embodiments of this application, when it is determined that the total load rate of the plurality of power conversion circuits meets the preset load rate of the plurality of power conversion circuits, it may be determined that the total load rate of the plurality of power conversion circuits is at a specified efficiency stage in the efficiency curve, that is, it is determined that a quantity of power conversion circuits currently in the operating state is the optimal operating quantity, and the quantity of currently operating power conversion circuits is maintained. When the total load rate of the plurality of power conversion circuits does not meet the preset load rate of the plurality of power conversion circuits, it may further be determined that the total load rate of the plurality of power conversion circuits is not at the specified efficiency stage in the efficiency curve, and the optimal operating quantity of the plurality of power conversion circuits is determined based on the preset load rate corresponding to the specified efficiency stage, rated power of a single power conversion circuit, and the current total output power of the plurality of power conversion circuits.

In some embodiments of this application, when it is determined that there are a plurality of optimal operating quantities of the plurality of power conversion circuits, it may be determined, from the plurality of optimal operating quantities as a final optimal operating quantity, an operating quantity of power conversion circuits with highest conversion efficiency and in the operating state in the plurality of power conversion circuits. Specifically, when it is determined that the optimal operating quantity is not a unique value, load rates corresponding to the plurality of optimal operating quantities may be separately determined. Then, an optimal efficiency point in the load rates corresponding to the plurality of optimal operating quantities is determined based on the efficiency curve of the single power conversion circuit, and the final optimal operating quantity is determined based on the optimal efficiency point, to ensure that all power conversion circuits in the operating state have highest conversion efficiency after the optimal operating quantity is switched to.

In some embodiments of this application, when it is determined that there are a plurality of optimal operating quantities of the plurality of power conversion circuits, it may be determined, from the plurality of optimal operating quantities as a final optimal operating quantity, an operating quantity closest to a current operating quantity of the plurality of power conversion circuits. Specifically, when it is determined that the optimal operating quantity is not a unique value, the quantity of operating power conversion circuits in the plurality of power conversion circuits may also be controlled to be switched to the optimal operating quantity closest to the quantity of currently operating power conversion circuits, so that a quantity of actions of the power conversion circuit can be reduced, and stable operation of the system is facilitated.

For technical effect that can be achieved by any possible design in the second aspect and the third aspect, refer to technical effect that can be achieved by any possible design in the first aspect. Details are not described herein again. These aspects or other aspects of this application are more concise and easier to understand in descriptions of the following embodiments.

## BRIEF DESCRIPTION OF DRAWINGS

FIG. 1 is a diagram of a structure of an energy storage system;
FIG. 2 is a diagram of a connection relationship of a power converter;
FIG. 3 is a diagram of a structure of a power converter according to an embodiment of this application;
FIG. 4 is a schematic of a circuit structure of a power conversion circuit according to an embodiment of this application;
FIG. 5 is a schematic of another circuit structure of a power conversion circuit according to an embodiment of this application;
FIG. 6 is a schematic of still another circuit structure of a power conversion circuit according to an embodiment of this application;
FIG. 7 is a schematic of yet another circuit structure of a power conversion circuit according to an embodiment of this application; and
FIG. 8 is a diagram of conversion efficiency of a power conversion circuit.

## DESCRIPTION OF EMBODIMENTS

To make objectives, technical solutions, and advantages of this application clearer, the following further describes this application in detail with reference to accompanying drawings.

Terms used in the following embodiments are merely intended to describe specific embodiments, but are not intended to limit this application. Terms "one", "a", "the", "the foregoing", "this", and "the one" of singular forms used in this specification and the appended claims of this application are also intended to include an expression like "one or more", unless otherwise specified in the context clearly.

Reference to "an embodiment", "some embodiments", or the like described in this specification indicates that one or more embodiments of this application include a specific feature, structure, or characteristic described with reference to the embodiment. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. Terms "include", "contain", "have", and their variants all mean "include but are not limited to", unless otherwise specifically emphasized in another manner.

In addition, same reference numerals in the figures indicate same or similar structures. Therefore, repeated descriptions thereof are omitted. Words for expressing locations and directions in this application are described by using the accompanying drawings as examples. However, changes may also be made as required, and all the changes shall fall within the protection scope of this application. The accompanying drawings in this application are merely used to illustrate a relative location relationship, and do not indicate a true scale.

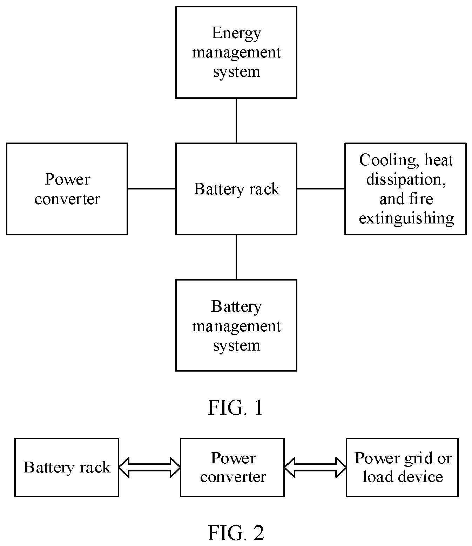

Refer to FIG. 1. An energy storage system used for industrial and commercial use or a power station usually includes core components such as a battery rack (battery rack, BR), a battery management system (battery management system, BMS), a power converter, an energy management system, and components for cooling, heat dissipation, and fire extinguishing. Refer to FIG. 2. An input end of the power converter is coupled to an output end of the battery rack, an output end of the power converter is coupled to a power grid or a load device, and the power converter is configured to perform energy conversion on electric energy provided by the battery rack and then output the electric energy to the power grid or the load device. To improve system power, the power converter usually includes a plurality of power conversion circuits connected in parallel. Input ends of the plurality of power conversion circuits are coupled to the output end of the battery rack, and output ends of the plurality of power conversion circuits are coupled to the power grid or the load device. When load remains unchanged, conversion efficiency of a power conversion device can be improved by optimally controlling a switching frequency in the power conversion circuit to reduce a conversion loss. However, when the load falls within a light load range, each power converter operates in a low-efficiency state, and the conversion efficiency of the power converter is significantly reduced. This is not conducive to improving round-trip efficiency of the energy storage system.

To overcome the foregoing problem, this application provides a power converter and a control method thereof, and an energy storage system, to control, based on a change in total output power of a plurality of power conversion circuits, at least one of the plurality of power conversion circuits to enter or exit operation, to change a quantity of power conversion circuits in an operating state in the plurality of power conversion circuits, so that conversion efficiency of each power conversion circuit that is in the operating state and that is obtained through the change is improved, so as to improve operating efficiency of the power converter, especially system efficiency under light load.

The following describes in detail the power converter and the drive control method thereof, and the energy storage system provided in this application with reference to the accompanying drawings.

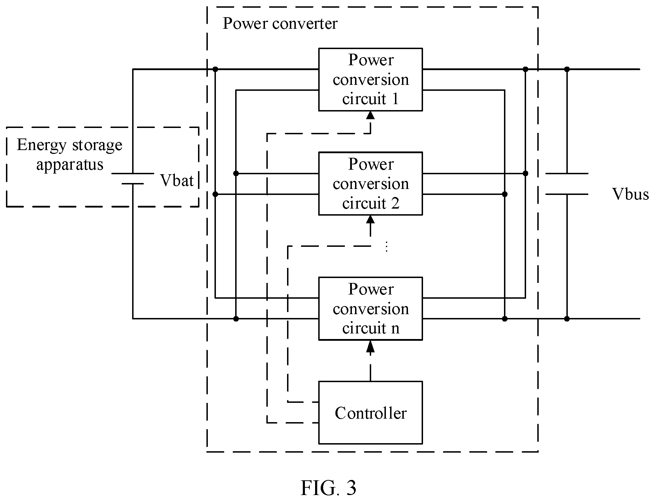

Refer to FIG. 3. In this embodiment of this application, a power converter includes a plurality of power conversion circuits connected in parallel. FIG. 3 shows n power conversion circuits. An input end of each power conversion circuit is connected to an output end of an energy storage apparatus, an output end of each power conversion circuit is connected to a load device or a power grid, and each power conversion circuit is configured to output a bus voltage Vbus or an alternating current after power conversion is performed on a battery voltage Vbat provided by the energy storage apparatus. The power converter usually further includes a controller. Each power conversion circuit includes a plurality of switching transistors. The controller is configured to control an on/off state of the switching transistor in each power conversion circuit, to control an output voltage and an output current of the power conversion circuit, and further control output efficiency and conversion efficiency of the power conversion circuit. The switching transistor used in the power conversion circuit needs to be a switching transistor that can switch an on/off state at a high frequency. For example, the switching transistor may be one or more of a plurality of types of switching transistors such as a metal-oxide-semiconductor field-effect transistor (metal-oxide-semiconductor field-effect transistor, MOSFET), a bipolar junction transistor (bipolar junction transistor, BJT), and an insulated gate bipolar transistor (insulated gate bipolar transistor, IGBT). This is not enumerated one by one in embodiments of this application. For example, the controller may be any one of a microprocessor (microcontroller unit, MCU), a general-purpose central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA), and the like, or may be any one or a combination of another programmable logic device, a transistor logic device, and a hardware component.

In this application, based on a change in total output power of output ends of the plurality of power conversion circuits, at least one of the plurality of power conversion circuits may be controlled to be switched between an operating state and a stopped state, that is, the at least one of the plurality of power conversion circuits is controlled to enter or exit operation, to change a quantity of operating power conversion circuits in the plurality of power conversion circuits, so that conversion efficiency of the power conversion circuit that is in the operating state and that is obtained through switching is improved, to improve operating efficiency of the power converter, especially system efficiency under light load. When the power conversion circuit is in the operating state, a waveform is output. When the power conversion circuit is in the stopped state, no waveform is output.

Specifically, in this application, when total output power of the power converter decreases because a load of the power converter changes, at least one of the plurality of power conversion circuits may be controlled to be switched from the operating state to the stopped state, so that after the total output power of the power converter decreases to a specified value, each power conversion circuit in the operating state has first conversion efficiency. After the at least one power conversion circuit is switched from the operating state to the stopped state, each power conversion circuit in the operating state has second conversion efficiency. The second conversion efficiency is greater than the first conversion efficiency. This improves the conversion efficiency of the power conversion circuit in the operating state, and further improves the operating efficiency of the power converter. The conversion efficiency can be obtained through calculation based on input power and output power.

Specifically, in this application, when the total output power of the power converter increases because the load of the power converter changes, the at least one of the plurality of power conversion circuits may be controlled to be switched from the stopped state to the operating state, so that after the total output power of the power converter increases to a specified value, each power conversion circuit in the operating state has third conversion efficiency. After the at least one power conversion circuit is switched from the stopped state to the operating state, each power conversion circuit in the operating state has fourth conversion efficiency. The fourth conversion efficiency is greater than the third conversion efficiency. This improves the conversion efficiency of the power conversion circuit in the operating state, and further improves the operating efficiency of the power converter.

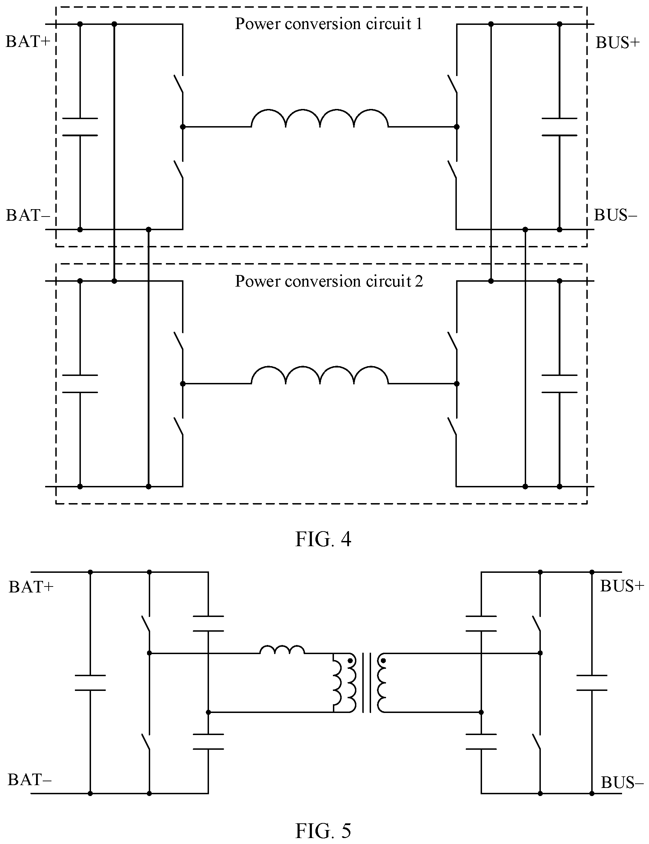

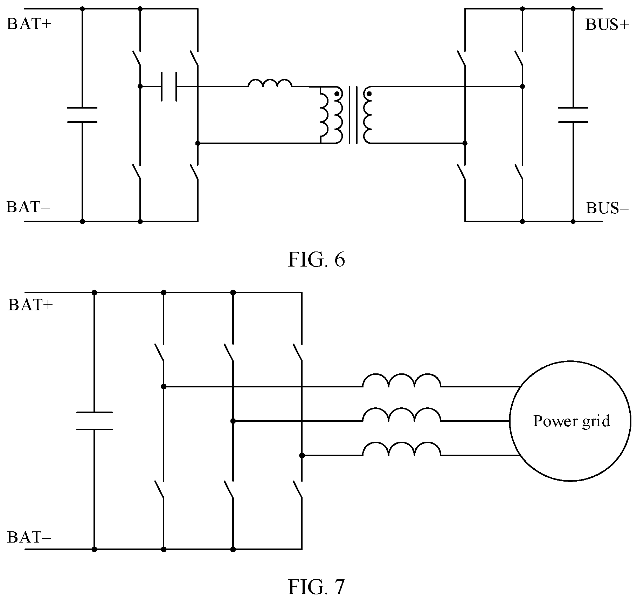

In some embodiments of this application, each power conversion circuit may specifically include a direct current/direct current converter (DC/DC Converter, DCDC). The DCDC is configured to convert, through boosting or bucking into different voltages for a downstream device, a direct current provided by the energy storage apparatus. Refer to FIG. 4. The DCDC may specifically use an H-bridge topology structure to form a bidirectional buck/boost circuit, to support bidirectional flow of charging and discharging energy and wide voltage range adjustment. The H-bridge topology structure may specifically include an inductor, two bridge arms respectively connected to two ends of the inductor, and two filter capacitors. Each bridge arm includes two bridge arm switches connected in series, and each bridge arm is connected in parallel to one filter capacitor. Two ends of one bridge arm are respectively connected to the output end of the energy storage apparatus, and a bridge arm midpoint is connected to one end of the inductor. Two ends of the other bridge arm are respectively connected to a direct current bus, and a bridge arm midpoint is connected to the other end of the inductor. Refer to FIG. 5. The DCDC may further use a half-bridge LLC topology structure. Alternatively, refer to FIG. 6. The DCDC may use a fullbridge LLC topology structure.

In some other embodiments of this application, each power conversion circuit may specifically include a power conversion system (power conversion system, PCS). The PCS is configured to convert a direct current into an alternating current, and is responsible for grid forming of an alternating current power grid. Refer to FIG. 7. The PCS may specifically use a fullbridge inverter topology structure.

In some other embodiments of this application, each power conversion circuit may specifically include a DCDC and a PCS. The DCDC is connected between the energy storage apparatus and the PCS, and the PCS is connected to the power grid as a downstream device of the DCDC.

In FIG. 4, two power conversion circuits are used as examples for description. In FIG. 5 to FIG. 7, one power conversion circuit is used as an example for description. The power converter provided in embodiments of this application is applicable to various power conversion circuits, and is not limited to a specific topology structure.

In some embodiments of this application, the controller may obtain a current output voltage and a current output current of the output end of the power converter in real time, calculate current total output power of the power converter in real time, determine an optimal operating quantity of the plurality of power conversion circuits based on total rated power of the power converter and a preset load rate of the power converter, and control a quantity of power conversion circuits in the operating state in the plurality of power conversion circuits to be switched to the optimal operating quantity, so that operating efficiency of each power converter is optimal. The preset load rate is determined based on a relationship between conversion efficiency and a load rate of the plurality of power conversion circuits and preset conversion efficiency of the plurality of power conversion circuits.

Specifically, the controller may first determine a current total load rate of the plurality of power conversion circuits based on the current total output power of the plurality of power conversion circuits and the total rated power of the plurality of power conversion circuits. The total load rate may be specifically equal to a ratio of the total output power to the total rated power. Then, the controller determines the optimal operating quantity of the plurality of power conversion circuits based on the total load rate and the known preset load rate. Finally, the controller controls the quantity of operating power conversion circuits in the plurality of power conversion circuits to be switched to the optimal operating quantity. In this way, conversion power borne by the power conversion circuit in the operating state is increased to a high conversion efficiency range, to complete conversion efficiency optimization control. The known preset load rate may be learned of based on a known efficiency curve of a single power conversion circuit.

In this application, the optimal operating quantity is determined, so that the power conversion circuit can be controlled to operate in the high conversion efficiency range at the current load rate, to prevent all power conversion circuits from operating at a light-load and low-efficiency point, reduce a total loss of the power converter, and significantly improve system operating efficiency.

In some embodiments of this application, when determining that the total load rate of the plurality of power conversion circuits meets the preset load rate of the plurality of power conversion circuits, the controller may specifically determine that the total load rate of the plurality of power conversion circuits is at a specified efficiency stage in an efficiency curve, that is, determine that a quantity of power conversion circuits currently in the operating state is the optimal operating quantity, and maintain the quantity of currently operating power conversion circuits. When determining that the total load rate of the plurality of power conversion circuits does not meet the preset load rate of the plurality of power conversion circuits, the controller may further determine that the total load rate of the plurality of power conversion circuits is not at a specified efficiency stage in an efficiency curve, and determine the optimal operating quantity of the plurality of power conversion circuits based on the preset load rate corresponding to the specified efficiency stage, rated power of a single power conversion circuit, and the current total output power of the plurality of power conversion circuits.

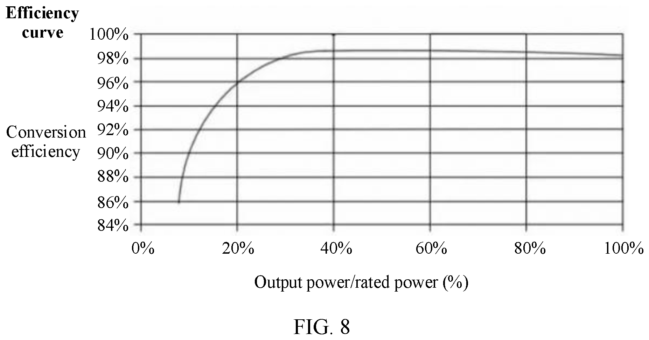

In embodiments of this application, different types of power conversion circuits have different known efficiency curves, that is, correspond to different preset load rates. Refer to FIG. 8. The efficiency curve records the relationship between the load rate and the conversion efficiency of the power conversion circuit, that is, different load rates correspond to different conversion efficiency. For example, the efficiency curve shown in FIG. 8 is used as an example. It may be set that conversion efficiency higher than 96% is a high efficiency stage, and a corresponding load rate is greater than 20%. If it is determined that the total load rate of the plurality of power conversion circuits is greater than 20%, it is considered that the load rate is at the high efficiency stage, and the quantity of currently operating power conversion circuits is maintained. If it is determined that the total load rate of the plurality of power conversion circuits is less than 20%, it is considered that the load rate is not at the high efficiency stage, and the optimal operating quantity of the plurality of power conversion circuits is determined based on the preset load rate corresponding to the high efficiency stage, the rated power of the single power conversion circuit, and the total output power of the plurality of power conversion circuits. Alternatively, for another example, it may be set that the conversion efficiency greater than 98% is the high efficiency stage, and a corresponding load rate is greater than 30%. If it is determined that the total load rate of the plurality of power conversion circuits is greater than 30%, it is considered that the load rate is at the high efficiency stage, and the quantity of currently operating power conversion circuits is maintained. If it is determined that the total load rate of the plurality of power conversion circuits is less than 30%, it is considered that the load rate is not at the high efficiency stage, and the optimal operating quantity of the plurality of power conversion circuits is determined based on the preset load rate corresponding to the high efficiency stage, the rated power of the single power conversion circuit, and the total output power of the plurality of power conversion circuits.

In some embodiments of this application, when determining that there are a plurality of optimal operating quantities of the plurality of power conversion circuits, the controller may determine, from the plurality of optimal operating quantities as a final optimal operating quantity, an operating quantity of power conversion circuits with highest conversion efficiency and in the operating state in the plurality of power conversion circuits. Specifically, when it is determined that the optimal operating quantity is not a unique value, load rates corresponding to the plurality of optimal operating quantities may be separately determined. Then, an optimal efficiency point in the load rates corresponding to the plurality of optimal operating quantities is determined based on the efficiency curve of the single power conversion circuit, and the final optimal operating quantity is determined based on the optimal efficiency point, to ensure that all power conversion circuits in the operating state have highest conversion efficiency after the optimal operating quantity is switched to.

In some other embodiments of this application, when determining that there are a plurality of optimal operating quantities of the plurality of power conversion circuits, the controller may determine, from the plurality of optimal operating quantities as a final optimal operating quantity, an operating quantity closest to a current operating quantity of the plurality of power conversion circuits. Specifically, when it is determined that the optimal operating quantity is not a unique value, the quantity of operating power conversion circuits in the plurality of power conversion circuits may also be controlled to be switched to the optimal operating quantity closest to the quantity of currently operating power conversion circuits, so that a quantity of actions of the power conversion circuit can be reduced, and stable operation of the system is facilitated.

The following describe, by using a specific embodiment as an example, a manner of optimizing the conversion efficiency of the power converter in this application.

When the power converter starts to be powered on and operate, the controller may control all the power conversion circuits connected in parallel to be in the operating state. The controller may obtain the output voltage and the output current of the power converter in real time, and calculate the total output power $P_0$ of the power converter in real time. The controller determines the total load rate of the plurality of power conversion circuits by dividing the total output power $P_0$ of the plurality of power conversion circuits by the total rated power $P_N$ of the plurality of power conversion circuits. The total load rate is compared with, for example, the known efficiency curve of the single power conversion circuit shown in FIG. 8, to determine the optimal operating quantity of the plurality of power conversion circuits.

If the total load rate is at the high efficiency stage, the quantity of currently operating power conversion circuits is maintained. If the total load rate is not at the high efficiency stage, the optimal operating quantity of the plurality of power conversion circuits is determined based on the preset load rate corresponding to the high efficiency stage, the rated power of the single power conversion circuit, and the total output power of the plurality of power conversion circuits. Specifically, it can be learned from the efficiency curve that two load rates $\gamma_1$ and $\gamma_2$ corresponding to ends of the high efficiency range, the rated power $P_n$ of the single power conversion circuit, the total output power $P_0$ of the plurality of power conversion circuits, and the optimal operating quantity n satisfy Formula 1.

$$\begin{cases} \frac{P_O}{n \times P_n} \leq \gamma_1 \\ \frac{P_O}{n \times P_n} \geq \gamma_2 \end{cases} \qquad \text{(Formula 1)}$$

Formula 2 for calculating the optimal operating quantity n may be derived from Formula 1.

$$\frac{P_O}{\gamma_1 \times P_n} \leq n \leq \frac{P_O}{\gamma_2 \times P_n} \qquad \text{(Formula 2)}$$

An integer value that satisfies Formula 2 is obtained through calculation and is used as the optimal operating quantity n. If the calculated optimal operating quantity n is not a unique value, load rates corresponding to different values of n are separately calculated, conversion efficiency corresponding to the load rates is obtained from the efficiency curve, and an optimal conversion efficiency point is obtained through comparison, to finally determine the optimal operating quantity n. Alternatively, if the calculated optimal operating quantity n is not a unique value, a value closest to the current operating quantity is used as the optimal operating quantity with reference to the quantity of currently operating power conversion circuits.

Finally, the controller controls all switching transistors in redundant power conversion circuits in the power converter to be turned off, so that the redundant power conversion circuits exit the operating state. In this way, conversion power borne by the power conversion circuit in the operating state is increased to the high efficiency range, to complete conversion efficiency optimization control.

The power converter provided in this embodiment of this application may be widely used in an energy storage system like an industrial and commercial energy storage system, a power station energy storage system, or a charging station.

Based on this, this application further provides an energy storage system. The energy storage system includes the power converter and the energy storage apparatus. Input ends of a plurality of power conversion circuits in the power converter are connected to an output end of the energy storage apparatus, output ends of the plurality of power conversion circuits are connected to a load device or a power grid, and the power converter is configured to output, after power conversion, electric energy provided by the energy storage apparatus. Based on total output power of the plurality of power conversion circuits, different power conversion circuits in the plurality of power conversion circuits may be controlled to enter or exit operation, to change a quantity of power conversion circuits in an operating state in the plurality of power conversion circuits, so that conversion efficiency of each power conversion circuit in the operating state is improved, to improve operating efficiency of the power converter, especially system efficiency under light load.

Based on a same inventive concept, an embodiment of this application further provides a control method for a power converter. The power converter includes a plurality of power conversion circuits connected in parallel, and the control method includes: Based on a change in total output power of output ends of the plurality of power conversion circuits, at least one of the plurality of power conversion circuits is controlled to be switched between an operating state and a stopped state, that is, the at least one of the plurality of power conversion circuits is controlled to enter or exit operation, to change a quantity of operating power conversion circuits in the plurality of power conversion circuits, so that conversion efficiency of the power conversion circuit that is in the operating state and that is obtained through switching is improved, to improve operating efficiency of the power converter, especially system efficiency under light load.

In this application, when the total output power of the power converter decreases because a load of the power converter changes, the at least one of the plurality of power conversion circuits may be controlled to be switched from the operating state to the stopped state, so that after the total output power of the power converter decreases to a specified value, each power conversion circuit in the operating state has first conversion efficiency. After the at least one power conversion circuit is switched from the operating state to the stopped state, each power conversion circuit in the operating state has second conversion efficiency. The second conversion efficiency is greater than the first conversion efficiency. This improves the conversion efficiency of the power conversion circuit in the operating state, and further improves the operating efficiency of the power converter. The conversion efficiency can be obtained through calculation based on input power and output power.

In this application, when the total output power of the power converter increases because the load of the power converter changes, the at least one of the plurality of power conversion circuits may be controlled to be switched from the stopped state to the operating state, so that after the total output power of the power converter increases to a specified value, each power conversion circuit in the operating state has third conversion efficiency. After the at least one power conversion circuit is switched from the stopped state to the operating state, each power conversion circuit in the operating state has fourth conversion efficiency. The fourth conversion efficiency is greater than the third conversion efficiency. This improves the conversion efficiency of the power conversion circuit in the operating state, and further improves the operating efficiency of the power converter.

In some embodiments of this application, a current output voltage and a current output current of the output end of the power converter may be obtained in real time, current total output power of the power converter is calculated in real time, an optimal operating quantity of the plurality of power conversion circuits is determined based on total rated power of the power converter and a preset load rate of the power converter, and a quantity of power conversion circuits in the operating state in the plurality of power conversion circuits is controlled to be switched to the optimal operating quantity, so that operating efficiency of each power converter is optimal. The preset load rate is determined based on a relationship between conversion efficiency and a load rate of the plurality of power conversion circuits and preset conversion efficiency of the plurality of power conversion circuits.

In some embodiments of this application, a current total load rate of the plurality of power conversion circuits may be first determined based on the current total output power of the plurality of power conversion circuits and the total rated power of the plurality of power conversion circuits. The total load rate may be specifically equal to a ratio of the total output power to the total rated power. Then, a controller determines the optimal operating quantity of the plurality of power conversion circuits based on the total load rate and the known preset load rate. Finally, the controller controls the quantity of operating power conversion circuits in the plurality of power conversion circuits to be switched to the optimal operating quantity. In this way, conversion power borne by the power conversion circuit in the operating state is increased to a high conversion efficiency range, to complete conversion efficiency optimization control. The known preset load rate may be learned of based on a known efficiency curve of a single power conversion circuit.

In some embodiments of this application, when it is determined that the total load rate of the plurality of power conversion circuits meets the preset load rate of the plurality of power conversion circuits, it may be determined that the total load rate of the plurality of power conversion circuits is at a specified efficiency stage in the efficiency curve, that is, it is determined that a quantity of power conversion circuits currently in the operating state is the optimal operating quantity, and the quantity of currently operating power conversion circuits is maintained. When the total load rate of the plurality of power conversion circuits does not meet the preset load rate of the plurality of power conversion circuits, it may further be determined that the total load rate of the plurality of power conversion circuits is not at the specified efficiency stage in the efficiency curve, and the optimal operating quantity of the plurality of power conversion circuits is determined based on the preset load rate corresponding to the specified efficiency stage, rated power of a single power conversion circuit, and the current total output power of the plurality of power conversion circuits.

In some embodiments of this application, when it is determined that there are a plurality of optimal operating quantities of the plurality of power conversion circuits, it may be determined, from the plurality of optimal operating quantities as a final optimal operating quantity, an operating quantity of power conversion circuits with highest conversion efficiency and in the operating state in the plurality of power conversion circuits. Specifically, when it is determined that the optimal operating quantity is not a unique value, load rates corresponding to the plurality of optimal operating quantities may be separately determined. Then, an optimal efficiency point in the load rates corresponding to the plurality of optimal operating quantities is determined based on the efficiency curve of the single power conversion circuit, and the final optimal operating quantity is determined based on the optimal efficiency point, to ensure that all power conversion circuits in the operating state have highest conversion efficiency after the optimal operating quantity is switched to.

In some other embodiments of this application, when it is determined that there are a plurality of optimal operating quantities of the plurality of power conversion circuits, it may be determined, from the plurality of optimal operating quantities as a final optimal operating quantity, an operating quantity closest to a current operating quantity of the plurality of power conversion circuits. Specifically, when it is determined that the optimal operating quantity is not a unique value, the quantity of operating power conversion circuits in the plurality of power conversion circuits may also be controlled to be switched to the optimal operating quantity closest to the quantity of currently operating power conversion circuits, so that a quantity of actions of the power conversion circuit can be reduced, and stable operation of the system is facilitated.

It is clear that a person skilled in the art can make various modifications and variations to this application without departing from the spirit and scope of this application. This application is intended to cover these modifications and variations of this application provided that they fall within the scope of the claims and their equivalent technologies.

## Claims

1. A power converter, comprising a plurality of power conversion circuits, wherein the plurality of power conversion circuits are connected in parallel, input ends of the plurality of power conversion circuits are configured to connect to an output end of an energy storage apparatus, output ends of the plurality of power conversion circuits are configured to connect to a direct current bus or an alternating current bus, and the power converter is configured to output, after power conversion, electric energy provided by the energy storage system; and
in response to a decrease in total output power of the output ends of the plurality of power conversion circuits, at least one of the plurality of power conversion circuits is switched from an operating state to a stopped state.

2. The power converter according to claim 1, wherein in response to an increase in the total output power of the output ends of the plurality of power conversion circuits, the at least one of the plurality of power conversion circuits is switched from the stopped state to the operating state.

3. The power converter according to claim 1 or 2, further comprising a controller, wherein the controller is configured to:

   determine an optimal operating quantity of the plurality of power conversion circuits based on current total output power of the output ends of the plurality of power conversion circuits, total rated power of the plurality of power conversion circuits, and a preset load rate of the plurality of power conversion circuits; and
   control a quantity of power conversion circuits in the operating state in the plurality of power conversion circuits to be switched to the optimal operating quantity.

4. The power converter according to claim 3, wherein the preset load rate is determined based on a relationship between conversion efficiency and a load rate of the plurality of power conversion circuits and preset conversion efficiency of the plurality of power conversion circuits.

5. The power converter according to claim 3 or 4, wherein the controller is specifically configured to:

   determine a current total load rate of the plurality of power conversion circuits based on the current total output power of the output ends of the plurality of power conversion circuits and the total rated power of the plurality of power conversion circuits; and
   if it is determined that the current total load rate of the plurality of power conversion circuits meets the preset load rate of the plurality of power conversion circuits, determine that a quantity of power conversion circuits currently in the operating state is the optimal operating quantity; or
   if it is determined that the total load rate of the plurality of power conversion circuits does not meet the preset load rate of the plurality of power conversion circuits, determine the optimal operating quantity of the plurality of power conversion circuits based on the preset load rate of the plurality of power conversion circuits, rated power of a single power conversion circuit, and the current total output power of the output ends of the plurality of power conversion circuits.

6. The power converter according to any one of claims 3 to 5, wherein the controller is specifically configured to: when it is determined that there are a plurality of optimal operating quantities of the plurality of power conversion circuits, determine, from the plurality of optimal operating quantities as a final optimal operating quantity, an operating quantity of power conversion circuits with highest conversion efficiency and in the operating state in the plurality of power conversion circuits.

7. The power converter according to any one of claims 3 to 5, wherein the controller is specifically configured to: when it is determined that there are a plurality of optimal operating quantities of the plurality of power conversion circuits, determine, from the plurality of optimal operating quantities as a final optimal operating quantity, an operating quantity closest to a current operating quantity of the plurality of power conversion circuits.

8. An energy storage system, comprising an energy storage apparatus and the power converter according to any one of claims 1 to 7, wherein input ends of a plurality of power conversion circuits in the power converter are connected to an output end of the energy storage apparatus, output ends of the plurality of power conversion circuits are connected to a direct current bus or an alternating current bus, and the power converter is configured to output, after power conversion, electric energy provided by the energy storage system.

9. A control method for a power converter, wherein the power converter comprises a plurality of power conversion circuits, and the control method comprises:
   in response to a decrease in total output power of the output ends of the plurality of power conversion circuits, switching at least one of the plurality of power conversion circuits from an operating state to a stopped state.

10. The control method according to claim 9, further comprising: in response to an increase in the total output power of the output ends of the plurality of power conversion circuits, switching the at least one of the plurality of power conversion circuits from the stopped state to the operating state.

11. The control method according to claim 9 or 10, specifically comprising:

    determining an optimal operating quantity of the plurality of power conversion circuits based on current total output power of the output ends of the plurality of power conversion circuits, total rated power of the plurality of power conversion circuits, and a preset load rate of the plurality of power conversion circuits; and
    controlling a quantity of power conversion circuits in the operating state in the plurality of power conversion circuits to be switched to the optimal operating quantity.

12. The control method according to claim 11, wherein the preset load rate is determined based on a relationship between conversion efficiency and a load rate of the plurality of power conversion circuits and preset conversion efficiency of the plurality of power conversion circuits.

**13.** The control method according to claim 11 or 12, wherein determining the optimal operating quantity of the plurality of power conversion circuits based on the current total output power of the output ends of the plurality of power conversion circuits, the total rated power of the plurality of power conversion circuits, and the preset load rate of the plurality of power conversion circuits comprises:

determining a current total load rate of the plurality of power conversion circuits based on the current total output power of the output ends of the plurality of power conversion circuits and the total rated power of the plurality of power conversion circuits; and

if it is determined that the current total load rate of the plurality of power conversion circuits meets the preset load rate of the plurality of power conversion circuits, determining that a quantity of power conversion circuits currently in the operating state is the optimal operating quantity; or

if it is determined that the total load rate of the plurality of power conversion circuits does not meet the preset load rate of the plurality of power conversion circuits, determining the optimal operating quantity of the plurality of power conversion circuits based on the preset load rate of the plurality of power conversion circuits, rated power of a single power conversion circuit, and the current total output power of the output ends of the plurality of power conversion circuits.

**14.** The control method according to any one of claims 11 to 13, further comprising:

when it is determined that there are a plurality of optimal operating quantities of the plurality of power conversion circuits, determining, from the plurality of optimal operating quantities as a final optimal operating quantity, an operating quantity of power conversion circuits with highest conversion efficiency and in the operating state in the plurality of power conversion circuits.

**15.** The control method according to any one of claims 11 to 13, further comprising:

when it is determined that there are a plurality of optimal operating quantities of the plurality of power conversion circuits, determining, from the plurality of optimal operating quantities as a final optimal operating quantity, an operating quantity closest to a current operating quantity of the plurality of power conversion circuits.

FIG. 1

FIG. 2

FIG. 3

FIG. 4

FIG. 5

FIG. 6

FIG. 7

**Efficiency curve**

FIG. 8

## INTERNATIONAL SEARCH REPORT

| International application No. |
| --- |
| **PCT/CN2024/106461** |

### A. CLASSIFICATION OF SUBJECT MATTER

H02M1/00(2007.01)i; H02M1/36(2007.01)i; H02J7/00(2006.01)i

According to International Patent Classification (IPC) or to both national classification and IPC

### B. FIELDS SEARCHED

Minimum documentation searched (classification system followed by classification symbols)

H02M H02J

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 轻负载, 轻载, 功率, 数量, 效率, parallel, reduct+, efficiency, light 1w load

### C. DOCUMENTS CONSIDERED TO BE RELEVANT

| Category* | Citation of document, with indication, where appropriate, of the relevant passages | Relevant to claim No. |
| --- | --- | --- |
| PX | CN 117639436 A (HUAWEI DIGITAL POWER TECHNOLOGIES CO., LTD.) 01 March 2024 (2024-03-01)<br>claims 1-15 | 1-15 |
| X | CN 115940654 A (XFUSION DIGITAL TECHNOLOGIES CO., LTD.) 07 April 2023 (2023-04-07)<br>description, paragraphs 4-105, and figures 1-6 | 1-2, 8-10 |
| Y | CN 115940654 A (XFUSION DIGITAL TECHNOLOGIES CO., LTD.) 07 April 2023 (2023-04-07)<br>description, paragraphs 4-105, and figures 1-6 | 3-7, 11-15 |
| Y | CN 116260208 A (ZTE CORP.) 13 June 2023 (2023-06-13)<br>description, paragraphs 45-195, and figures 1-7 | 3-7, 11-15 |
| X | KR 20220090072 A (DAEJIN UNIVERSITY CENTER FOR EDUCATIONAL INDUSTRIAL COOPERATION et al.) 29 June 2022 (2022-06-29)<br>description, pages 7-12, and figures 1-6 | 1-2, 8-10 |

☑ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **09 October 2024** | **16 October 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/106461** |

| C. | DOCUMENTS CONSIDERED TO BE RELEVANT | |
| --- | --- | --- |
| Category* | Citation of document, with indication, where appropriate, of the relevant passages | Relevant to claim No. |
| Y | KR 20220090072 A (DAEJIN UNIVERSITY CENTER FOR EDUCATIONAL INDUSTRIAL COOPERATION et al.) 29 June 2022 (2022-06-29) description, pages 7-12, and figures 1-6 | 3-7, 11-15 |
| A | CN 101980436 A (NANJING UNIVERSITY OF AERONAUTICS AND ASTRONAUTICS) 23 February 2011 (2011-02-23) entire document | 1-15 |
| A | US 2018262018 A1 (PANASONIC INTELLECTUAL PROPERTY MANAGEMENT CO., LTD.) 13 September 2018 (2018-09-13) entire document | 1-15 |

Form PCT/ISA/210 (second sheet) (July 2022)

**INTERNATIONAL SEARCH REPORT**
**Information on patent family members**

International application No.

**PCT/CN2024/106461**

| Patent document cited in search report | | | Publication date (day/month/year) | Patent family member(s) | | | Publication date (day/month/year) |
|---|---|---|---|---|---|---|---|
| CN | 117639436 | A | 01 March 2024 | None | | | |
| CN | 115940654 | A | 07 April 2023 | None | | | |
| CN | 116260208 | A | 13 June 2023 | WO | 2024066911 | A1 | 04 April 2024 |
| KR | 20220090072 | A | 29 June 2022 | None | | | |
| CN | 101980436 | A | 23 February 2011 | None | | | |
| US | 2018262018 | A1 | 13 September 2018 | JP | 2017103869 | A | 08 June 2017 |
| | | | | WO | 2017094247 | A1 | 08 June 2017 |
| | | | | CN | 108292889 | A | 17 July 2018 |

Form PCT/ISA/210 (patent family annex) (July 2022)

## REFERENCES CITED IN THE DESCRIPTION

**Patent documents cited in the description**

- CN 202311353812X